(19) Europäisches Patentamt
European Patent Office
Office européen des brevets

(11) **EP 2 481 261 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(51) Int Cl.:
**H05B 33/08** (2006.01)

(21) Anmeldenummer: **10744556.1**

(22) Anmeldetag: **11.08.2010**

(86) Internationale Anmeldenummer:
**PCT/EP2010/061667**

(87) Internationale Veröffentlichungsnummer:
**WO 2011/035979 (31.03.2011 Gazette 2011/13)**

(54) **SCHALTUNGSANORDNUNG ZUM BETREIBEN MINDESTENS EINER LED**

CIRCUIT ARRANGEMENT FOR OPERATION OF AT LEAST ONE LED

AGENCEMENT DE CIRCUITS POUR LE FONCTIONNEMENT D'AU MOINS UNE DIODE ÉLECTROLUMINESCENTE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **22.09.2009 DE 102009042433**

(43) Veröffentlichungstag der Anmeldung:
**01.08.2012 Patentblatt 2012/31**

(73) Patentinhaber: **OSRAM GmbH
80807 München (DE)**

(72) Erfinder: **RUDOLPH, Bernd
85659 Forstern (DE)**

(56) Entgegenhaltungen:
**WO-A1-2008/086892       WO-A1-2009/089919
DE-A1-102005 058 484   US-A1- 2008 143 274
US-A1- 2009 295 300**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die vorliegende Erfindung betrifft eine Schaltungsanordnung zum Betreiben mindestens einer LED mit einem Eingang mit einem ersten und einem zweiten Eingangsanschluss zum Koppeln mit einer Versorgungsspannung, einem Ausgang mit einem ersten und einem zweiten Ausgangsanschluss zum Bereitstellen einer Ausgangsgleichspannung an die mindestens eine LED, einem Wechselrichter mit einer Brückenschaltung mit mindestens einem ersten und einem zweiten elektronischen Schalter, wobei der erste und der zweite elektronische Schalter jeweils eine Steuerelektrode, eine Bezugselektrode und eine Arbeitselektrode umfassen, wobei der erste und der zweite elektronische Schalter unter Ausbildung eines ersten Brückenmittelpunkts seriell zwischen den ersten und den zweiten Eingangsanschluss gekoppelt sind, einer ersten Induktivität, die seriell zwischen den ersten Brückenmittelpunkt und einen der Ausgangsanschlüsse gekoppelt ist, und einer Ansteuerschaltung mit mindestens einem ersten und einem zweiten Ausgangsanschluss, wobei der erste Ausgangsanschluss mit der Steuerelektrode des ersten und der zweite Ausgangsanschluss mit der Steuerelektrode des zweiten elektronischen Schalters gekoppelt ist.

### Stand der Technik

Eine derartige Schaltungsanordnung ist bekannt aus der WO 2007/065815 A1. Bei dieser bekannten Schaltungsanordnung werden die Schalter des Wechselrichters über eine brückentreiber mit integriertem Oszillator enthält die Schaltung einen Regelverstärker (AMP), um Toleranzen der Bauteile und Netzspannungsänderungen, die sich auf den LED-Strom auswirken, auszugleichen. Damit ist die Schaltung vergleichsweise aufwendig und teuer. Zudem ist eine Gleichspannungsversorgung der Ansteuervorrichtung notwendig.

In der Schrift US 2008/143274A1 ist ein Schaltungsanordnung zum Betreib einer Entladungslampe offenbart, die einen Halbbrückenwandler umfasst.

### Darstellung der Erfindung

Der vorliegenden Erfindung liegt deshalb die Aufgabe zugrunde, eine gattungsgemäße Schaltungsanordnung derart weiterzubilden, dass sie ohne integrierten Schaltkreis und mit möglichst wenigen Standardbauteilen eine präzise Regelung des LED-Stroms ermöglicht.

Diese Aufgabe wird gelöst durch eine Schaltungsanordnung mit den Merkmalen von Patentanspruch 1.

Der vorliegenden Erfindung liegt die Erkenntnis zugrunde, dass diese Aufgabe auf besonders einfache Weise gelöst werden kann, wenn die Schaltungsanordnung als Freischwinger konzipiert wird. Insofern umfasst die Ansteuerschaltung eine erste und eine zweite Steuervorrichtung, wobei die erste Steuervorrichtung eine zweite Induktivität umfasst, die mit der ersten Induktivität magnetisch gekoppelt ist, und wobei die zweite Steuervorrichtung eine dritte Induktivität umfasst, die mit der ersten Induktivität magnetisch gekoppelt ist. Durch diese Maßnahmen entfällt die Notwendigkeit eines integrierten Schaltkreises. Als Folge davon können die Erfordernisse entfallen, die im Stand der Technik zur Ableitung einer Versorgungsspannung für den integrierten Schaltkreis aus der gleichgerichteten Netzspannung erforderlich waren. Die Schaltung zeichnet sich überdies durch einen hohen Wirkungsgrad aus sowie durch eine symmetrische magnetische Aussteuerung der ersten Induktivität.

Eine bevorzugte Ausführungsform zeichnet sich dadurch aus, dass zwischen die zweite Induktivität und den ersten elektronischen Schalter eine erste Abschaltvorrichtung gekoppelt ist, die ausgelegt ist, den ersten elektronischen Schalter sperrend zu schalten, wenn der Strom durch den ersten elektronischen Schalter einen vorgebbaren Maximalwert erreicht hat.

Alternativ oder zusätzlich kann zwischen die dritte Induktivität und den zweiten elektronischen Schalter eine zweite Abschaltvorrichtung gekoppelt sein, die ausgelegt ist, den zweiten elektronischen Schalter sperrend zu schalten, wenn der Strom durch den zweiten elektronischen Schalter einen vorgebbaren Maximalwert erreicht hat. Da bei gegebener Stromkurvenform der arithmetische Mittelwert durch den Spitzenwert definiert ist, wird hierdurch eine sehr gute Stromregelung der LED erzielt.

Erfindungsgemäß ist in diesem Zusammenhang vorgesehen, dass die erste und die zweite Abschaltvorrichtung jeweils eine Strommessvorrichtung zum Messen des Stroms durch den jeweiligen elektronischen Schalter umfassen, sowie jeweils eine Thyristornachbildung mit einem Einschalt- und einem Abschalteingang, wobei der Einschalteingang mit der jeweiligen Strommessvorrichtung und der Abschalteingang mit der jeweiligen Induktivität gekoppelt ist. Die Verwendung von Thyristornachbildungen ermöglicht ein sehr schnelles

Ausräumen der Steuerelektrode des jeweiligen Schalters des Wechselrichters. Damit lässt sich der an die LED bereitgestellte Strom sehr präzise regeln. Wird als Strommessvorrichtung ein Shunt verwendet, um den Strom durch den jeweiligen Schalter des Wechselrichters zu messen, so kann die über dem Shunt abfallende Spannung unmittelbar zum Triggern der jeweiligen Thyristornachbildung und damit zum Ausschalten des jeweiligen elektronischen Schalters verwendet werden. Der Begriff Einschalten bezieht sich hier auf ein Einschalten der Thyristornachbildung, was in der Folge dann ein Abschalten des jeweiligen elektronischen Schalters zur Folge hat.

Bevorzugt ist in diesem Zusammenhang zwischen die jeweilige Strommessvorrichtung und den jeweiligen Einschalteingang jeweils eine erste Filtervorrichtung gekoppelt. Bevorzugt ist weiterhin zwischen die jeweilige Induktivität und die jeweilige Thyristornachbildung jeweils ein Zeitglied gekoppelt. Weiterhin bevorzugt ist zwischen das jeweilige Zeitglied und den jeweiligen Abschalteingang jeweils eine zweite Filtervorrichtung gekoppelt. Die erste und die zweite Filtervorrichtung dienen dazu, kapazitive Kopplungen, die ein versehentliches Triggern der Thyristornachbildung bewirken könnten, zu verhindern. Wenn man sich vor Augen hält, dass die Änderung dU/dt der Spannung am ersten Brückenmittelpunkt typisch 300 V/µs beträgt, so wird die Relevanz kapazitiver Kopplungen deutlich. Durch die Verwendung von Zeitgliedern zwischen der jeweiligen Induktivität und dem jeweiligen Abschalteingang der jeweiligen Thyristornachbildung kann auf besonders einfache Weise eine Totzeit eingestellt werden, in der die Schalter des Wechselrichters aus, d.h. sperrend, sind. Da die elektrischen Schalter des Wechselrichters bei der beschriebenen Vorgehensweise erst nach Erreichen eines vorgebbaren Maximalwerts ausgeschaltet werden, ist eine Funkentstörung der Schaltung mit sehr einfachen Mitteln möglich. Bei Verwendung einer pulsierenden Gleichspannung als Versorgungsspannung ergibt sich ein frequenzmodulierter Betrieb des Wechselrichters, da je nach der momentanen Amplitude der Versorgungsspannung unterschiedliche Zeitdauern bis zum Erreichen des jeweiligen maximalen Stromwerts benötigt werden.

Bevorzugt ist zwischen die jeweilige Induktivität und die jeweilige Thyristornachbildung eine jeweilige Diode gekoppelt. Dies sorgt dafür, dass nur die jeweils gewünschte Steuerspannung an den jeweiligen Schalter des Wechselrichters geleitet wird.

Bevorzugt umfasst die jeweilige Thyristornachbildung jeweils einen PNP-Transistor und jeweils einen NPN-Transistor, wobei die Arbeitselektrode des PNP-Transistors mit dem Abschalteingang und die Steuerelektrode des NPN-Transistors mit dem Einschalteingang der jeweiligen Thyristornachbildung gekoppelt ist. Auf diese Weise lässt sich mit sehr geringem Materialaufwand ein Thyristor nachbilden, der gegenüber einem echten Thyristor den Vorteil bietet, dass durch seine externe Beschaltung die statischen und dynamischen Eigenschaften präzise und wunschgemäß einstellbar sind. Bevorzugt ist der erste und der zweite elektronische Schalter als MOSFET ausgebildet. Dies ermöglicht ein Ein- und Ausschalten mittels kleiner Spannungen und nahezu ohne Strom.

Bei einer bevorzugten Ausführungsform ist parallel zu zumindest einem der beiden elektronischen Schalter ein Trapezkondensator gekoppelt. Dies ermöglicht die Verhinderung eines so genannten "harten" Schaltens. Mit anderen Worten wird dadurch auf einfache Weise ein schaltentlastetes Schalten der Schalter des Wechselrichters ermöglicht. Dies führt zu einer weiteren Reduktion von Funk-Störungen.

Bevorzugt umfasst eine erfindungsgemäße Schaltungsanordnung weiterhin eine Startschaltung, die zwischen den ersten Eingangsanschluss und die Steuerelektrode des zweiten elektronischen Schalters gekoppelt ist. Da der zweite elektronische Schalter mit seiner Bezugselektrode mit dem Massepotenzial gekoppelt ist, kann auf diese Weise sehr einfach ein Anlaufen des Freischwingers ermöglicht werden.

Bei einer bevorzugten Ausführungsform ist ein Speicherkondensator vorgesehen, der zwischen den ersten und den zweiten Eingangsanschluss gekoppelt ist, wobei der Speicherkondensator in Verbindung mit dem dazu parallel geschalteten Lastkreis derart ausgelegt ist, dass die Versorgungsspannung einen Wechselanteil von bis zu 50 % bezogen auf ihren Spitzenwert umfasst. Durch eine derartige Pulsation der Versorgungsspannung stellt sich, wie erwähnt, eine Frequenzmodulation ein, das heißt die Zeitdauer bis zum Erreichen des Maximalstroms durch den jeweiligen Schalter der Brückenschaltung variiert in Abhängigkeit der Versorgungsspannung. Dadurch verteilen sich die Funk-Störungen auf ein größeres Frequenzband, wodurch die Einhaltung der jeweiligen EMV-Normen deutlich erleichtert wird.

Bevorzugt ist zwischen die erste Induktivität und den Ausgang der Schaltungsanordnung ein Gleichrichter gekoppelt. Dieser stellt dann sicher, dass ein Gleichstrom an die LED bereitgestellt wird. Die LED kann aber auch ohne Veränderung der prinzipiellen Funktion der Schaltung über einen separaten Transformator, dessen Primärwicklung in Serie zur ersten Induktivität gekoppelt ist und an dessen Sekundärwicklung der Gleichrichter angeschlossen ist, gekoppelt sein. Dadurch kann eine Potenzialfreiheit für die LED hergestellt werden.

Alternativ kann vorgesehen sein, dass die Schaltungsanordnung weiterhin eine vierte Induktivität und einen Gleichrichter umfasst, wobei die vierte Induktivität magnetisch mit der ersten, der zweiten und der dritten Induktivität gekoppelt ist, wobei der Gleichrichter zwischen die vierte Induktivität und den Ausgang der Schaltungsanordnung gekoppelt ist. Auch hierdurch wird die Potenzialfreiheit der LED sichergestellt, wobei in besonders raumsparender Weise die vierte Induktivität mit zumindest einer der anderen Induktivitäten räumlich gekoppelt ist. Dies kann dadurch erzielt werden, dass die vierte Induktivität eine Hilfswicklung darstellt, das heißt, dass zweite, dritte und vierte Induktivität Hilfswicklungen darstellen und alle vier Induktivitäten auf demselben Kern gewickelt sind.

Weitere vorteilhafte Ausführungsformen ergeben sich aus den Unteransprüchen.

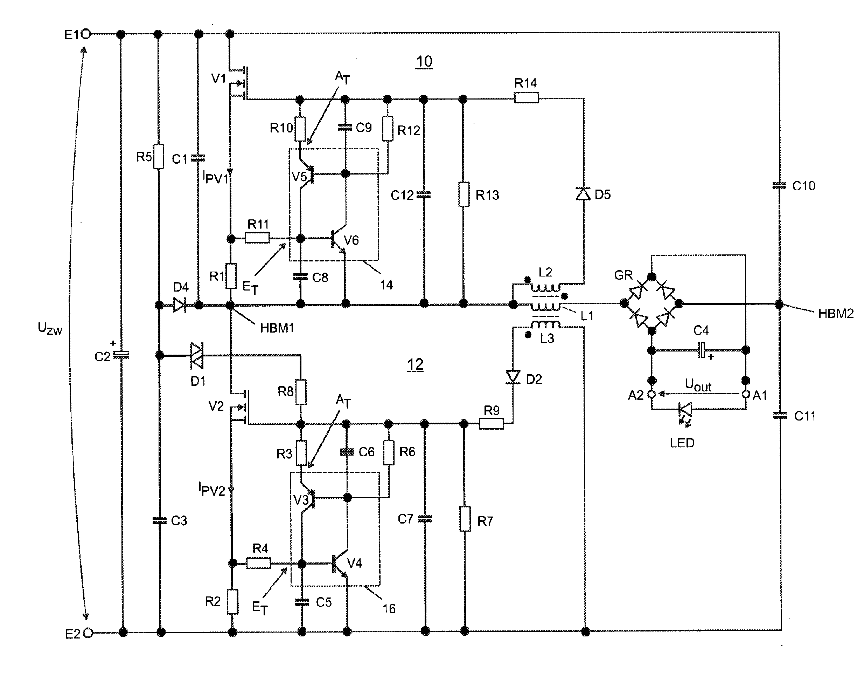

## Kurze Beschreibung der Zeichnung(en)

Im Nachfolgenden wird nunmehr ein Ausführungsbeispiel unter Bezugnahme auf die beigefügte Zeichnung näher beschrieben. Diese zeigt in schematischer Darstellung ein Ausführungsbeispiel einer erfindungsgemäßen Schaltungsanordnung.

## Bevorzugte Ausführung der Erfindung

Die einzige Figur zeigt in schematischer Darstellung ein Ausführungsbeispiel einer erfindungsgemäßen Schaltungsanordnung. An einem Eingang mit einem ersten und einem zweiten Eingangsanschluss ist eine Versorgungsspannung $U_{Zw}$ angeschlossen, die insbesondere die so genannte Zwischenkreisspannung darstellen kann. Zur Stabilisierung dieser Spannung ist ein Kondensator C2 vorgesehen. Durch die Dimensionierung des Kondensators C2 kann der Wechselanteil der am Eingang anliegenden Spannung $U_{Zw}$ beeinflusst werden. Das Verhältnis von Wechselanteil zu Gleichanteil der Spannung $U_{Zw}$ beeinflusst die von der Schaltungsanordnung verursachten Funk-Störungen.

Die Schaltung umfasst einen Wechselrichter mit zwei Transistoren V1, V2 in Halbbrückenanordnung. Dem jeweiligen Transistor V1, V2 ist ein Sourcewiderstand R1, R2 zugeschaltet, der der Messung des Stroms durch den jeweiligen Transistor V1, V2 dient. Zwischen V1, R1 einerseits und V2, R2 andererseits ist ein erster Halbbrückenmittelpunkt HBM1 der Schaltungsanordnung gebildet.

Die Schaltungsanordnung umfasst weiterhin einen Ausgang mit einem ersten A1 und einem zweiten Ausgangsanschluss A2 zum Bereitstellen einer Ausgangsgleichspannung $U_{out}$ an mindestens eine LED. Vorliegend ist zwischen dem ersten Halbbrückenmittelpunkt HBM1 und dem Ausgang A1, A2 der Schaltungsanordnung zunächst eine Drossel L1 vorgesehen, wobei seriell zur Drossel L1 ein Gleichrichter GR gekoppelt ist. Die Drossel L1 ist mit einem ersten Eingang eines Gleichrichters gekoppelt. Der zweite Eingang des Gleichrichters ist einerseits über einen Kondensator C10 mit dem Eingangsanschluss E1 und andererseits über einen Kondensator C11 mit dem Eingangsanschluss E2 gekoppelt. Zwischen den Kondensatoren C10 und C11 ist ein zweiter Halbbrückenmittelpunkt HBM 2 gebildet. Die am Ausgang des Gleichrichters abfallende Spannung ist die Spannung $U_{out}$, die mittels eines Kondensators C4 stabilisiert wird.

Die Schaltungsanordnung umfasst weiterhin eine zweite L2 und eine dritte Induktivität L3, die magnetisch mit der Drossel L1 gekoppelt sind. Zwischen die zweite Induktivität L2 und den Schalter V1 ist eine erste Abschaltvorrichtung 10 gekoppelt, die ausgelegt ist, den Schalter V1 sperrend zu schalten, wenn der Strom $I_{Pv1}$ durch den Schalter V1 einen vorgebbaren Maximalwert $I_{max1}$ erreicht hat. In entsprechender Weise ist zwischen die dritte Induktivität L3 und den Schalter V2 eine zweite Abschaltvorrichtung 12 gekoppelt, die ausgelegt ist, den Schalter V2 sperrend zu schalten, wenn der Strom $I_{Pv2}$ durch den zweiten elektronischen Schalter V2 einen Wert $I_{max2}$ erreicht hat.

Die erste 10 und die zweite Abschaltvorrichtung 12 verwenden den jeweiligen Source-Widerstand R1, R2 zum Messen des Stroms $I_{Pv1}$, $I_{Pv2}$ durch den jeweiligen Schalter V1, V2. Jede Abschaltvorrichtung 10, 12 umfasst überdies eine Thyristornachbildung 14, 16 mit jeweils einem Einschalteingang $E_T$ und einem Abschalteingang $A_T$. Der jeweilige Einschalteingang $E_T$ ist mit der jeweiligen Strommessvorrichtung R1, R2 gekoppelt, während der jeweilige Abschalteingang $A_T$ mit der jeweiligen Induktivität L2, L3 gekoppelt ist. Die jeweilige Thyristornachbildung 14, 16 umfasst zwei Transistoren: Die Thyristornachbildung 14 die Transistoren V5, V6 und die Thyristornachbildung 16 die Transistoren V3, V4.

Zwischen die Strommessvorrichtung R1 und den Eingang $E_T$ der Thyristornachbildung 14 ist eine Filtervorrichtung gekoppelt, die den ohmschen Widerstand R11 und den Kondensator C8 umfasst. Diese sorgt dafür, dass keine kapazitiven Kopplungen ein versehentliches Triggern der Thyristornachbildung 14 bewirken. Eine entsprechende Funktion nehmen der ohmsche Widerstand R4 und der Kondensator C5 mit Bezug auf die Thyristornachbildung 16 wahr.

Eine entsprechende Filtervorrichtung ist für den Steueranschluss des jeweils anderen Transistors V5, V3 der jeweiligen Thyristornachbildung 14, 16 vorgesehen. Mit Bezug auf die Thyristornachbildung 14 sind dies der ohmsche Widerstand R12 und der Kondensator C9, während für die Thyristornachbildung 16 diese Funktion der Kondensator C6 und der ohmsche Widerstand R6 übernehmen. Jede Abschaltvorrichtung umfasst überdies ein Zeitglied, mit dem die Totzeit einstellbar ist, in der beide Schalter V1, V2 der Halbbrückenanordnung aus, d.h. sperrend geschaltet sind. Für die Abschaltvorrichtung 10 übernehmen diese Aufgaben die ohmschen Widerstände R14, R13 sowie der Kondensator C12. Für die Abschaltvorrichtung 12 wird diese Funktion wahrgenommen von den ohmschen Widerständen R9, R7 sowie dem Kondensator C7. Zwischen die Steuerelektrode des Schalters V1 und den Emitter des Transistors V5 ist ein ohmscher Widerstand R10 gekoppelt. Entsprechend ist zwischen die Steuerelektrode des Schalters V2 und den Emitter des Transistors V3 ein Widerstand R3 gekoppelt.

Eine zwischen die jeweilige Induktivität L2, L3 und die jeweilige Thyristornachbildung 14, 16 gekoppelte jeweilige Diode D5, D2 stellt sicher, dass nur die jeweils gewünschte Polarität der Spannung der jeweiligen Induktivität L2, L3 zur Ansteuerung des jeweiligen Schalters V1, V2 verwendet wird.

Parallel zur Anordnung des Schalters V1 und den ohmschen Widerstands R1 ist ein Trapezkondensator C1 gekoppelt. Überdies ist eine RC-Diac-Startschaltung vorgesehen, die den ohmschen Widerstand R5, den Kondensator C3, die Diode D4, den Diac D1 und den ohmschen Widerstand R8 umfasst.

Zur Funktionsweise: Der Freischwinger wird mittels der genannten Startschaltung zu Schwingungen angeregt und schwingt dann mithilfe der Rückkopplung über die Hilfswicklungen L2, L3 auf der Strombegrenzungsdrossel L1 frei. Die Hilfswicklungen L2, L3 generieren genügend Sekundärspannung, um die als MOSFET ausgebildeten Schalter V1, V2 sicher einzuschalten. Das Einschalten wird definiert verzögert durch die genannten Zeitglieder sowie die jeweils aufzuladenden Gates der MOSFETs V1, V2, um eine Totzeit in der aktiven Ansteuerung der Schalter V1, V2 zu realisieren.

In einer ersten Phase ist der Schalter V1 geschlossen. Der Strom $I_{PV1}$ steigt an und fließt im Kreis V1, R1, L1 und einerseits über den Kondensator C10, andererseits über die Kondensatoren C11 und C2 zurück zum Schalter V1.

Erreicht der Spannungsabfall am Widerstand R1 einen vorgebbaren Wert, der durch die Basis-Emitter-Flussspannung $U_{BEF}$ des Transistors V6 der Thyristornachbildung 14 festgelegt ist, wird die Thyristornachbildung 14 getriggert, das heißt sie wird leitend, wodurch das Gate des Schalters V1 ausgeräumt wird. Dadurch geht der Schalter V1 in den sperrenden Zustand über. Durch entsprechende Kopplung der Induktivität L3 wird anschließend nach Ablauf einer Totzeit der entsprechende Schaltvorgang durch den Schalter V2 vollzogen. Dies wiederholt sich, so dass die Schaltungsanordnung frei schwingt.

Da bei einer gegebenen Stromkurvenform Spitzenwert und arithmetischer Mittelwert korreliert sind, das heißt der an die LED bereitgestellte Strom durch den Spitzenwert definiert ist, bewirkt die Schaltung eine gute Stromregelung. Da der Temperaturkoeffizient der Basis-Emitter-Flussspannung negativ ist, ist die Schaltungsanordnung auch thermisch stabil. Eine Verringerung des thermischen Durchgriffs lässt sich durch Temperaturkompensation der Sourcewiderstände R1, R2 mittels beispielsweise NTC-Widerstand oder Schottkydiode erzielen.

Wie bereits erwähnt ist die Betriebsfrequenz der Schaltungsanordnung variabel und hängt von der Eingangsspannung, der Induktivität L1 und dem abzuschaltenden Spitzenstrom ab:

$$I_{\max 1} = \frac{U_{BEF}(V6)}{R1} \quad \text{beziehungsweise} \quad I_{\max 2} = \frac{U_{BEF}(V4)}{R2} \; .$$

Ist bei einem symmetrischen Betrieb $I_{max1}$ gleich $I_{max2}$, ergibt sich die Frequenz näherungsweise zu

$$f = 4 \cdot \frac{L_1 \cdot I_{\max 1}}{U_{Zw}} \; .$$

Damit hat die Schaltungsanordnung sehr gute Voraussetzungen für eine einfache Funkentstörung, da die Schalter infolge des Trapezkondensators C1 nicht hart geschaltet werden und über die Frequenzabhängigkeit von der Eingangsspannung $U_{Zw}$ eine Frequenzmodulation bei pulsierender Gleichspannung erfolgt.

Bei dem in der Figur dargestellten Ausführungsbeispiel ist die LED potenzialmäßig mit der restlichen Schaltungsanordnung gekoppelt. Über eine zusätzliche Wicklung auf der Induktivität L1 oder einen separaten Transformator lässt sich ohne Weiteres Potenzialfreiheit für die mindestens eine LED herstellen.

An einem praktischen Realisierungsbeispiel führte eine Änderung der Netzspannung von plus/minus 10 % zu Änderungen des LED-Stroms von lediglich zwischen plus 2,6 % und minus 3,7 %.

**Patentansprüche**

1. Schaltungsanordnung zum Betreiben mindestens einer LED mit

    - einem Eingang mit einem ersten (E1) und einem zweiten Eingangsanschluss (E2) zum Koppeln mit einer Versorgungsspannung ($U_{Zw}$);
    - einem Ausgang mit einem ersten (A1) und einem zweiten Ausgangsanschluss (A2) zum Bereitstellen einer Ausgangsgleichspannung ($U_{out}$) an die mindestens eine LED;
    - einem Wechselrichter mit einer Brückenschaltung mit mindestens einem ersten (V1) und einem zweiten elektronischen Schalter (V2), wobei der erste (V1) und der zweite elektronische Schalter (V2) jeweils eine Steuerelektrode, eine Bezugselektrode und eine Arbeitselektrode umfassen, wobei der erste (V1) und der zweite elektronische Schalter (V2) unter Ausbildung eines ersten Brückenmittelpunkts (HBM1) seriell zwischen den ersten (E1) und den zweiten Eingangsanschluss (E2) gekoppelt sind;

- einer ersten Induktivität (L1), die seriell zwischen den ersten Brückenmittelpunkt (HBM1) und einen der Ausgangsanschlüsse (A1; A2) gekoppelt ist; und

- einer Ansteuerschaltung mit mindestens einem ersten und einem zweiten Ausgangsanschluss, wobei der erste Ausgangsanschluss mit der Steuerelektrode des ersten (V1) und der zweite Ausgangsanschluss mit der Steuerelektrode des zweiten elektronischen Schalters (V2) gekoppelt ist;

wobei die Ansteuerschaltung eine erste (L2, 10, D5) und eine zweite Steuervorrichtung (L3, 12, D2) umfasst, wobei die erste Steuervorrichtung (L2, 10, D5) eine zweite Induktivität (L2) umfasst, die mit der ersten Induktivität (L1) magnetisch gekoppelt ist, und

wobei die zweite Steuervorrichtung (L3, 12, D2) eine dritte Induktivität (L3) umfasst, die mit der ersten Induktivität (L1) magnetisch gekoppelt ist,

wobei zwischen die zweite Induktivität (L2) und den ersten elektronischen Schalter (V1) eine erste Abschaltvorrichtung (10) gekoppelt ist, die ausgelegt ist, den ersten elektronischen Schalter (V1) sperrend zu schalten, wenn der Strom ($I_{PV1}$) durch den ersten elektronischen Schalter (V1) einen vorgebbaren Maximalwert ($I_{max1}$) erreicht hat, wobei die Schaltungsanordnung **dadurch gekennzeichnet ist,**

**dass** die mindestens eine Abschaltvorrichtung (10; 12) eine jeweilige Strommessvorrichtung (R1; R2) zum Messen des Stroms ($I_{PV1}$; $I_{PV2}$) durch den jeweiligen elektronischen Schalter (V1; V2) umfasst, sowie eine jeweilige Thyristornachbildung (14; 16) mit einem Einschalt- ($E_T$) und einem Abschalteingang ($A_T$), wobei der Einschalteingang ($E_T$) mit der jeweiligen Strommessvorrichtung (R1; R2) und der Abschalteingang ($A_T$) mit der jeweiligen Induktivität (L2; L3) gekoppelt ist.

2. Schaltungsanordnung nach einem der Ansprüche 1 oder 2,
**dadurch gekennzeichnet,**
**dass** zwischen die dritte Induktivität (L3) und den zweiten elektronischen Schalter (V2) eine zweite Abschaltvorrichtung (12) gekoppelt ist, die ausgelegt ist, den zweiten elektronischen Schalter (V2) sperrend zu schalten, wenn der Strom ($I_{PV2}$) durch den zweiten elektronischen Schalter (V2) einen vorgebbaren Maximalwert ($I_{max2}$) erreicht hat.

3. Schaltungsanordnung nach Anspruch 1 oder 2,
**dadurch gekennzeichnet,**
**dass** zwischen die jeweilige Strommessvorrichtung (R1; R2) und den jeweiligen Einschalteingang ($E_T$) jeweils eine erste Filtervorrichtung (R11, C8; R4, C5) gekoppelt ist.

4. Schaltungsanordnung nach einem der vorigen Ansprüche,
**dadurch gekennzeichnet,**
**dass** zwischen die jeweilige Induktivität (L1; L2; L3) und die jeweilige Thyristornachbildung (14; 16) jeweils ein Zeitglied (R14, R13, C12; R9, R7, C7) gekoppelt ist.

5. Schaltungsanordnung nach Anspruch 4,
**dadurch gekennzeichnet,**
**dass** zwischen das jeweilige Zeitglied (R14, R13, C12; R9, R7, C7) und den jeweiligen Abschalteingang ($A_T$) jeweils eine zweite Filtervorrichtung (C9, R12; C6, R6) gekoppelt ist.

6. Schaltungsanordnung nach einem der vorigen Ansprüche,
**dadurch gekennzeichnet,**
**dass** zwischen die jeweilige Induktivität (L1; L2; L3) und die jeweilige Thyristornachbildung (14; 16) eine jeweilige Diode (D5; D2) gekoppelt ist.

7. Schaltungsanordnung nach einem der vorigen Ansprüche,
**dadurch gekennzeichnet,**
**dass** die jeweilige Thyristornachbildung (14; 16) jeweils einen PNP-Transistor (V5; V3) und jeweils einen NPN-Transistor (V6; V4) umfasst, wobei die Arbeitselektrode des PNP-Transistors (V5; V3) mit dem Abschalteingang ($A_T$) und die Steuerelektrode des NPN-Transistors (V6; V4) mit dem Einschalteingang ($E_T$) der jeweiligen Thyristornachbildung (14; 16) gekoppelt ist.

8. Schaltungsanordnung nach einem der vorhergehenden Ansprüche,

**dadurch gekennzeichnet,**
**dass** der erste (V1) und der zweite elektronische Schalter (V2) als MOSFET ausgebildet sind.

9. Schaltungsanordnung nach einem der vorhergehenden Ansprüche,
**dadurch gekennzeichnet,**
**dass** parallel zu zumindest einem der beiden elektronischen Schalter (V1; V2) ein Trapezkondensator (C1) gekoppelt ist.

10. Schaltungsanordnung nach einem der vorhergehenden Ansprüche,
**dadurch gekennzeichnet,**
**dass** sie weiterhin eine Startschaltung (C1, R5, D4, D1, R8) umfasst, die zwischen den ersten Eingangsanschluss (E1) und die Steuerelektrode des zweiten elektronischen Schalters (V2) gekoppelt ist.

11. Schaltungsanordnung nach einem der vorhergehenden Ansprüche,
**dadurch gekennzeichnet,**
**dass** sie einen Speicherkondensator umfasst, der zwischen den ersten (E1) und den zweiten Eingangsanschluss (E2) gekoppelt ist, wobei der Speicherkondensator (C2) in Verbindung mit dem dazu parallel geschalteten Lastkreis derart ausgelegt ist, dass die Versorgungsspannung ($U_{Zw}$) einen Wechselanteil von bis zu 50% bezogen auf ihren Spitzenwert umfasst.

12. Schaltungsanordnung nach einem der vorhergehenden Ansprüche,
**dadurch gekennzeichnet,**
**dass** zwischen die erste Induktivität (L1) und den Ausgang der Schaltungsanordnung ein Gleichrichter (GR) gekoppelt ist.

13. Schaltungsanordnung nach einem der vorhergehenden Ansprüche,
**dadurch gekennzeichnet,**
**dass** in Serie zur ersten Induktivität (L1) eine erste Wicklung eines Transformators gekoppelt ist, wobei der Transformator eine zweite Wicklung umfasst, wobei mit der zweiten Wicklung ein Gleichrichter und der Ausgang der Schaltungsanordnung gekoppelt ist.

14. Schaltungsanordnung nach einem der Ansprüche 1 bis 12,
**dadurch gekennzeichnet,**
**dass** sie weiterhin eine vierte Induktivität und einen Gleichrichter (GR) umfasst, wobei die vierte Induktivität magnetisch mit der ersten (L1), der zweiten (L2) und der dritten Induktivität (L3) gekoppelt ist, wobei der Gleichrichter (GR) zwischen die vierte Induktivität und den Ausgang der Schaltungsanordnung gekoppelt ist.

**Claims**

1. Circuit arrangement for operating at least one LED comprising

   - an input comprising a first input connection (E1) and a second input connection (E2) for coupling to a supply voltage ($U_{Zw}$);
   - an output comprising a first output connection (A1) and a second output connection (A2) for providing a DC output voltage ($U_{out}$) to the at least one LED;
   - an inverter comprising a bridge circuit comprising at least one first electronic switch (V1) and one second electronic switch (V2), wherein the first electronic switch (V1) and the second electronic switch (V2) each comprise a control electrode, a reference electrode and a working electrode, wherein the first electronic switch (V1) and the second electronic switch (V2) are coupled in series between the first input connection (E1) and the second input connection (E2) so as to form a first bridge centre point (HBM1);
   - a first inductance (L1), which is coupled in series between the first bridge centre point (HBM1) and one of the output connections (A1; A2); and
   - an actuation circuit comprising at least one first output connection and one second output connection, wherein the first output connection is coupled to the control electrode of the first electronic switch (V1) and the second output connection is coupled to the control electrode of the second electronic switch (V2);

   wherein the actuation circuit comprises a first control apparatus (L2, 10, D5) and a second control apparatus (L3, 12, D2),

wherein the first control apparatus (L2, 10, D5) comprises a second inductance (L2), which is magnetically coupled to the first inductance (L1), and

wherein the second control apparatus (L3, 12, D2) comprises a third inductance (L3), which is magnetically coupled to the first inductance (L1),

wherein a first switch-off apparatus (10) is coupled between the second inductance (L2) and the first electronic switch (V1), said first switch-off apparatus being designed to turn the first electronic switch (V1) off when the current ($I_{Pv1}$) through the first electronic switch (V1) has reached a presettable maximum value ($I_{max1}$),

wherein the circuit arrangement is **characterized in that** the at least one switch-off apparatus (10; 12) comprises a respective current-measuring apparatus (R1; R2) for measuring the current ($I_{Pv1}$; $I_{Pv2}$) through the respective electronic switch (V1; V2), as well as a respective thyristor simulator (14; 16) comprising a switch-on input ($E_T$) and a switch-off input ($A_T$), wherein the switch-on input ($E_T$) is coupled to the respective current-measuring apparatus (R1; R2) and the switch-off input ($A_T$) is coupled to the respective inductance (L2; L3).

2. Circuit arrangement according to Claim 1,
   **characterized**
   **in that** a second switch-off apparatus (12) is coupled between the third inductance (L3) and the second electronic switch (V2), said second switch-off apparatus being designed to turn the second electronic switch (V2) off when the current ($I_{Pv2}$) through the second electronic switch (V2) has reached a presettable maximum value ($I_{max2}$).

3. Circuit arrangement according to Claim 1 or 2,
   **characterized**
   **in that** in each case a first filter apparatus (R11, C8; R4, C5) is coupled between the respective current-measuring apparatus (R1; R2) and the respective switch-on input ($E_T$).

4. Circuit arrangement according to one of the preceding claims,
   **characterized**
   **in that** in each case one timing element (R14, R13, C12; R9, R7, C7) is coupled between the respective inductance (L1; L2; L3) and the respective thyristor simulator (14; 16).

5. Circuit arrangement according to Claim 4,
   **characterized**
   **in that** in each case one second filter apparatus (C9, R12; C6, R6) is coupled between the respective timing element (R14, R13, C12; R9, R7, C7) and the respective switch-off input ($A_T$).

6. Circuit arrangement according to one of the preceding claims,
   **characterized**
   **in that** a respective diode (D5; D2) is coupled between the respective inductance (L1; L2; L3) and the respective thyristor simulator (14; 16).

7. Circuit arrangement according to one of the preceding claims,
   **characterized**
   **in that** the respective thyristor simulator (14; 16) comprises in each case one PNP transistor (V5; V3) and in each case one NPN transistor (V6; V4), wherein the working electrode of the PNP transistor (V5; V3) is coupled to the switch-off input ($A_T$) and the control electrode of the NPN transistor (V6; V4) is coupled to the switch-on input ($E_T$) of the respective thyristor simulator (14; 16).

8. Circuit arrangement according to one of the preceding claims,
   **characterized**
   **in that** the first electronic switch (V1) and the second electronic switch (V2) are in the form of MOSFETs.

9. Circuit arrangement according to one of the preceding claims,
   **characterized**
   **in that** a trapezoidal capacitor (C1) is coupled in parallel with at least one of the two electronic switches (V1; V2).

10. Circuit arrangement according to one of the preceding claims,
    **characterized**
    **in that** said circuit arrangement furthermore comprises a starting circuit (C1, R5, D4, D1, R8), which is coupled between the first input connection (E1) and the control electrode of the second electronic switch (V2).

11. Circuit arrangement according to one of the preceding claims,
**characterized**
**in that** said circuit arrangement comprises a storage capacitor, which is coupled between the first input connection (E1) and the second input connection (E2), wherein the storage capacitor (C2) is designed in combination with the load circuit connected in parallel therewith such that the supply voltage ($U_{ZW}$) comprises an AC component of up to 50% based on its peak value.

12. Circuit arrangement according to one of the preceding claims,
**characterized**
**in that** a rectifier (GR) is coupled between the first inductance (L1) and the output of the circuit arrangement.

13. Circuit arrangement according to one of the preceding claims,
**characterized**
**in that** a first winding of a transformer is coupled in series with the first inductance (L1), wherein the transformer comprises a second winding, wherein a rectifier and the output of the circuit arrangement are coupled to the second winding.

14. Circuit arrangement according to one of Claims 1 to 12,
**characterized**
**in that** said circuit arrangement furthermore comprises a fourth inductance and a rectifier (GR), wherein the fourth inductance is magnetically coupled to the first inductance (L1), the second inductance (L2) and the third inductance (L3), wherein the rectifier (GR) is coupled between the fourth inductance and the output of the circuit arrangement.

**Revendications**

1. Agencement de circuits pour le fonctionnement d'au moins une diode électroluminescente DEL, avec

- une entrée avec une première borne d'entrée (E1) et une deuxième borne d'entrée (E2) pour le couplage à une tension d'alimentation ($U_{ZW}$) ;
- une sortie avec une première borne de sortie (A1) et une deuxième borne de sortie (A2) pour la fourniture d'une tension continue de sortie ($U_{out}$) à ladite au moins une DEL;
- un onduleur avec un circuit en pont avec au moins un premier (V1) et un deuxième (V2) interrupteurs électroniques, dans lequel le premier (V1) et le deuxième (V2) interrupteurs électroniques comprennent respectivement une électrode de commande, une électrode de référence et une électrode de travail, dans lequel le premier (V1) et le deuxième (V2) interrupteurs électroniques sont couplés en série entre la première (E1) et la deuxième (E2) bornes d'entrée en formant un premier noeud de pont (HBM1);
- une première inductance (L1), qui est couplée en série entre le premier noeud de pont (HBM1) et une des bornes de sortie (A1; A2); et
- un circuit de commande avec au moins une première et une deuxième bornes de sortie, dans lequel la première borne de sortie est couplée à l'électrode de commande du premier interrupteur électronique (V1) et la deuxième borne de sortie est couplée à l'électrode de commande du deuxième interrupteur électronique (V2);

dans lequel le circuit de commande comprend un premier dispositif de commande (L2, 10, D5) et un deuxième dispositif de commande (L3, 12, D2),
dans lequel le premier dispositif de commande (L2, 10, D5) comprend une deuxième inductance (L2), qui est couplée magnétiquement à la première inductance (L1), et
dans lequel le deuxième dispositif de commande (L3, 12, D2) comprend une troisième inductance (L3), qui est couplée magnétiquement à la première inductance (L1),
dans lequel un premier dispositif de coupure (10) est couplé entre la deuxième inductance (L2) et le premier interrupteur électronique (V1), lequel est conçu pour commuter en position d'interruption le premier interrupteur électronique (V1), lorsque le courant ($I_{PV1}$) à travers le premier interrupteur électronique (V1) atteint une valeur maximale pré-déterminable ($I_{max1}$),
dans lequel l'agencement de circuits est **caractérisé en ce que**
ledit au moins un dispositif de coupure (10; 12) comprend un dispositif respectif de mesure du courant (R1; R2) pour la mesure du courant ($I_{PV1}$; $I_{PV2}$) à travers l'interrupteur électronique respectif (V1; V2), ainsi qu'une simulation de thyristor respective (14; 16) avec une entrée d'enclenchement ($E_T$) et une entrée de déclenchement ($A_T$), dans lequel l'entrée d'enclenchement ($E_T$) est couplée au dispositif respectif de mesure du courant (R1; R2) et l'entrée de déclenchement ($A_T$) est couplée à l'inductance respective (L2; L3).

2. Agencement de circuits selon la revendication 1, **caractérisé en ce qu'**un deuxième dispositif de coupure (12) est couplé entre la troisième inductance (L3) et le deuxième interrupteur électronique (V2), lequel est conçu pour commuter en position d'interruption le deuxième interrupteur électronique (V2), lorsque le courant ($I_{PV2}$) à travers le deuxième interrupteur électronique (V2) atteint une valeur maximale ($I_{max2}$) pré-déterminable.

3. Agencement de circuits selon la revendication 1 ou 2, **caractérisé en ce qu'**un premier dispositif de filtrage (R11, C8; R4, C5) est couplé respectivement entre le premier dispositif de mesure du courant (R1; R2) et l'entrée d'enclenchement respective ($E_T$).

4. Agencement de circuits selon l'une quelconque des revendications précédentes, **caractérisé en ce qu'**un élément temporisé (R14, R13, C12; R9, R7, C7) est respectivement couplé entre l'inductance respective (L1; L2; L3) et la simulation de thyristor respective (14; 16).

5. Agencement de circuits selon la revendication 4, **caractérisé en ce qu'**un deuxième dispositif de filtrage (C9, R12; C6, R6) est respectivement couplé entre l'élément temporisé respectif (R14, R13, C12; R9, R7, C7) et l'entrée de déclenchement respective ($A_T$).

6. Agencement de circuits selon l'une quelconque des revendications précédentes, **caractérisé en ce qu'**une diode respective (D5; D2) est couplée entre l'inductance respective (L1; L2; L3) et la simulation de thyristor respective (14; 16).

7. Agencement de circuits selon l'une quelconque des revendications précédentes, **caractérisé en ce que** la simulation de thyristor respective (14; 16) comprend chaque fois un transistor PNP (V5; V3) et chaque fois un transistor NPN (V6; V4), dans lequel l'électrode de travail du transistor PNP (V5; V3) est couplée à l'entrée de déclenchement ($A_T$) et l'électrode de commande du transistor NPN (V6; V4) est couplée à l'entrée d'enclenchement ($E_T$) de la simulation de thyristor respective (14; 16).

8. Agencement de circuits selon l'une quelconque des revendications précédentes, **caractérisé en ce que** le premier (V1) et le deuxième (V2) interrupteurs électroniques sont réalisés sous la forme de MOSFET.

9. Agencement de circuits selon l'une quelconque des revendications précédentes, **caractérisé en ce qu'**un condensateur trapèze (C1) est couplé en parallèle à au moins un des deux interrupteurs électroniques (V1; V2).

10. Agencement de circuits selon l'une quelconque des revendications précédentes, **caractérisé en ce qu'**il comprend en outre un circuit de démarrage (C1, R5, D4, D1, R8), qui est couplé entre la première borne d'entrée (E1) et l'électrode de commande du deuxième interrupteur électronique (V2).

11. Agencement de circuits selon l'une quelconque des revendications précédentes, **caractérisé en ce qu'**il comprend un condensateur de puissance, qui est couplé entre la première (E1) et la deuxième (E2) bornes d'entrée, dans lequel le condensateur de puissance (C2) est conçu en liaison avec le circuit de charge monté en parallèle avec lui, de telle manière que la tension d'alimentation ($U_{Zw}$) comprenne une partie alternative atteignant jusqu'à 50 % rapportée à sa valeur de pointe.

12. Agencement de circuits selon l'une quelconque des revendications précédentes, **caractérisé en ce qu'**un redresseur (GR) est couplé entre la première inductance (L1) et la sortie de l'agencement de circuits.

13. Agencement de circuits selon l'une quelconque des revendications précédentes, **caractérisé en ce qu'**un premier enroulement d'un transformateur est couplé en série avec la première inductance (L1), dans lequel le transformateur comprend un deuxième enroulement, dans lequel un redresseur et la sortie de l'agencement de circuits sont couplés au deuxième enroulement.

14. Agencement de circuits selon l'une quelconque des revendications 1 à 12, **caractérisé en ce qu'**il comprend en outre une quatrième inductance et un redresseur (GR), dans lequel la quatrième inductance est couplée magnétiquement à la première (L1), à la deuxième (L2) et à la troisième (L3) inductances, dans lequel le redresseur (GR) est couplé entre la quatrième inductance et la sortie de l'agencement de circuits.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007065815 A1
- US 2008143274 A1